(19) Europäisches Patentamt
European Patent Office
Office européen des brevets

(11) Veröffentlichungsnummer: **0 355 646**
**A2**

# (12) EUROPÄISCHE PATENTANMELDUNG

(21) Anmeldenummer: **89114979.1**

(51) Int. Cl.4: **C08G 75/02**

(22) Anmeldetag: **12.08.89**

(30) Priorität: **25.08.88 DE 3828760**

(43) Veröffentlichungstag der Anmeldung:
**28.02.90 Patentblatt 90/09**

(84) Benannte Vertragsstaaten:
**BE DE FR GB IT**

(71) Anmelder: **BAYER AG**

**D-5090 Leverkusen 1 Bayerwerk(DE)**

(72) Erfinder: **Köhler, Burkhard, Dr.**
**Virneburgstrasse 9**
**D-4150 Krefeld(DE)**
Erfinder: **Meyer, Rolf-Volker, Dr.**
**Buchheimerstrasse 23**
**D-4150 Krefeld(DE)**
Erfinder: **Dorf, Ernst-Ulrich, Dr.**
**Bodelschwinghstrasse 16**
**D-4150 Krefeld 1(DE)**
Erfinder: **Rüsseler, Wolfgang, Dr.**
**Waldhofstrasse 121**
**D-4150 Krefeld 1(DE)**
Erfinder: **Schmidt, Manfred, Dr.**
**Erich-Klausener-Strasse 37**
**D-4150 Krefeld(DE)**

## (54) Verfahren zur Herstellung von unverzweigten Polyarylensulfiden mit verbesserter Farbqualität und Farbstabilität.

(57) Die Erfindung betrifft ein Verfahren zur Herstellung von linearen unverzweigten Polyarylensulfiden aus Dichloraromaten und Alkalisulfiden in tetraalkylierten, cyclischen Harnstoffen als Umsetzungsmedium.

EP 0 355 646 A2

# Verfahren zur Herstellung von unverzweigten Polyarylensulfiden mit verbesserter Farbqualität und Farbstabilität

Die Erfindung betrifft ein Verfahren zur Herstellung von linearen, unverzweigten Polyarylensulfiden aus Dichloraromaten und Alkalisulfiden in tetraalkylierten, cyclischen Harnstoffen als Umsetzungsmedium.

Es ist bekannt, unverzweigte Polyarylensulfide mit hohen Schmelzviskositäten aus Dialkalisulfidhydraten und Dichloraromaten in Abwesenheit von Wasser herzustellen. (EP-OS 171 021). Diese Polyarylensulfide haben eine hohe Schmelzviskosität. Eine Verwendung von Verzweigern oder ein Curingschritt ist nicht erforderlich. Als Lösungsmittel wurden z.B. N-Methylcaprolactam und/oder N,N-Dialkyde eingesetzt. Die auf diese Weise hergestellten Produkte können jedoch unter außergewöhnlichen thermischen Anforderungen nicht immer befriedigende farbliche Eigenschaften zeigen.

Aus der EP-OS 87 045 ist bekannt, verzweigte Polyarylensulfide mit verbesserter Farbqualität in Gegenwart von N,N′-tetraalkylierten, cyclischen Harnstoffen als Solvens aus Dihalogen-, Trihalogen und/oder Tetrahalogenbenzolen und Alkalisulfiden herzustellen. Diese verzweigten Produkte zeigen jedoch die bei verzweigten Thermoplasten beobachtbaren Nachteile, z.B. geringere Zähigkeit oder Reißdehnung.

Es wurde nun gefunden, daß lineare Polyarylensulfide mit verbesserter Farbqualität und Farbstabilität aus Dihalogenaromaten und Schwefelspendern in ausgewählten N,N′-dialkylierten, cyclischen Harnstoffen erhalten werden, wenn im Umsetzungsgemisch vorhandenes Wasser, z.B. von Dialkylsulfidhydraten, in einem der Polymerisationsreaktion vorgelagerten Schritt azeotrop entfernt wird, wobei der eingesetzte Dihalogenaromat als Schlepper für die azeotrope Entwässerung dienen kann.

Gegenstand der Erfindung ist daher ein Verfahren zur Herstellung von Polyarylensulfiden, vorzugsweise Polyphenylensulfiden aus

a) 50 bis 100 Mol.-% Dihalogenaromaten der Formel

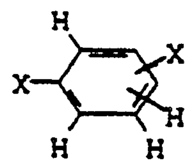

(I),

und 0 - 50 Mol.-% Dihalogenaromaten der Formel

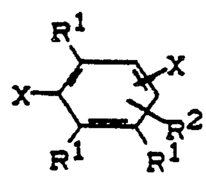

(II),

in denen

X für zueinander meta- oder paraständiges Halogen wie Chlor oder Brom steht und

$R^1$ gleich oder verschieden ist und Wasserstoff, $C_1$-$C_4$-Alkyl, $C_5$-$C_{10}$-Cycloalkyl, $C_6$-$C_{24}$-Aryl, $C_7$-$C_{24}$-Alkylaryl, $C_7$-$C_{24}$-Arylalkyl sein kann, wobei zwei zueinander orthoständige Reste $R^1$ zu einem aromatischen oder heterocyclischen Ring mit 6 bis 24 Atomen, bei dem bis zu drei Ring-C-Atome durch Heteroatome wie N, O, S ersetzt sein können, verknüpft sein können und mindestens ein Rest $R^1$ verschieden von Wasserstoff ist und

Alkalisulfiden, bevorzugt Natrium- oder Kaliumsulfid oder deren Mischung, bevorzugt in Form ihrer Hydrate oder wäßrigen Mischungen, gegebenenfalls zusammen mit Alkalihydroxiden wie Natrium- und Kaliumhydroxid, wobei das molare Verhältnis von Dichloraromaten zu Sulfiden im Bereich von 0,85 : 1 bis 1,15 : 1, bevorzugt 0,95 : 1 bis 1,05 : 1 liegt, dadurch gekennzeichnet, daß als Lösungsmittel N,N′-dialkylierte, cyclische Harnstoffe der Formel III

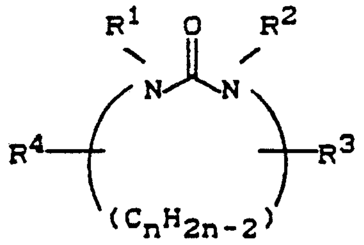

(III),

in welcher
$R^1$, $R^2$ gleich oder verschieden sind und für $C_1$-$C_{22}$-Alkyl, $C_6$-$C_{24}$-Aryl, bevorzugt Methyl, Ethyl, Phenyl, besonders bevorzugt Methyl stehen und
$R^3$, $R^4$ für Wasserstoff (H), $C_1$-$C_{22}$-Alkyl, bevorzugt H oder Methyl stehen und
n für die Zahl 2, 3 oder 4, bevorzugt 2 und 3, besonders bevorzugt 2 steht,
verwendet werden und daß das molare Verhältnis von Alkalisulfiden zu dem organischen Lösungsmittel im Bereich von 1 : 2 bis 1 : 5 liegt, und wasserfreie Einsatzstoffe vorgelegt und auf mindestens 150 °C, bevorzugt 205 °C bis 220 °C, erwärmt werden und wasserhaltige Stoffe und Reste der wasserfreien Einsatzstoffe in Form einer Lösung oder Schmelze oder als Feststoff so eingetragen werden, daß das eingebrachte Wasser aus dem Reaktionsgemisch destillativ abgetrennt wird und die Reaktion anschließend bei Temperaturen von 210 °C bis 270 °C, bevorzugt 215 °C bis 250 °C, gegebenenfalls unter leichtem Überdruck bis zu 10 bar durchgeführt wird.

Als Katalysatoren können erfindungsgemäß die hierfür bekannten Substanzen in üblichen Mengen eingesetzt werden, beispielsweise Alkalifluoride, Alkaliphosphate, Alkalicarboxylate, $\epsilon$-Caprolactam, bevorzugt $\epsilon$-Caprolactam. Es werden pro Mol Alkalisulfid 0,02 bis 1,0 Mol Katalysator eingesetzt.

Als Cosolventien können beispielsweise N,N-Dialkylcarbonsäureamide von $C_1$-$C_8$-aliphatischen und $C_6$-$C_{12}$-aromatischen Carbonsäuren in einer Menge von 0,02 bis 1 Mol. bezogen auf 1 Mol Alkalisulfid, eingesetzt werden.

Alkalisulfide werden in üblichen Mengen und in üblicher Weise eingesetzt. z.B. sind Lithium-, Natrium-, Kalium-und Rubidiumsulfid geeignet, vorzugsweise Natrium- und Kaliumsulfid. Weiterhin können die Alkalisulfide aus Hydrogensulfiden mit Alkalihydroxiden wie LiOH, NaOH und KOH in situ erzeugt werden. Es können Mischungen sowohl der Sulfide als auch der Hydroxide eingesetzt werden.

Erfindungsgemäß können meta- und para-Dihalogenaromaten der Formel (I) bzw. (II) eingesetzt werden. In diesem Fall kann das Verhältnis meta- zu para-Dihalogenaromaten bis zu 30 : 70 betragen. Besonders bevorzugt werden p-Dihalogenaromaten eingesetzt.

Beispiele für erfindungsgemäß einzusetzende Dihalogenaromaten der Formel (I) sind: p-Dichlorbenzol, p-Dibrombenzol, 1-Chlor-4-brombenzol, 1,3-Dichlorbenzol, 1,3-Dibrombenzol, 1-Chlor-3-brombenzol, 1-Chlor-3-brombenzol. Sie sind alleine oder im Gemisch miteinander verwendbar. Besonders bevorzugt sind 1,4-Dichlorbenzol und 1,4-Dibrombenzol.

Beispiele für erfindungsgemäß einzusetzende Dihalogenaromaten der Formel (II) sind: 2,5-Dichlortoluol, 2,5-Dichlorxylol, 1-Ethyl-2,5-dichlorbenzol, 1-Ethyl-2,5- dibrombenzol, 1-Ethyl-2-brom-5-chlorbenzol, 1,2,4,5-Tetramethyl-3,5-dichlorbenzol, 1-Cyclohexyl-2,5-dichlorbenzol, 1-Phenyl-2,5-dichlorbenzol, 1-Benzyl-2,5-dichlorbenzol-1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromcumol und 1-Cyclohexyl-3,5-dichlorbenzol. Sie sind allein oder im Gemisch miteinander einsetzbar.

Erfindungsgemäß geeignete organische Lösungsmittel sind N,N′-Dimethyl-2-imidazolidinon, N,N′-Dimethyl-2-tetrahydropyrimidinon, N,N′-Dimethyl-3-methyl-imidazolidinon-2, N,N′-Dimethyl-2-tetrahydrodiazepinon oder die entsprechenden N,N′-Diethylverbindungen.

Die Reaktionszeit kann bis zu 40 Stunden betragen, bevorzugt 2 bis 25 Stunden. Die Umsetzung wird bei Atmosphärendruck oder unter Anwendung eines Überdruckes bis 8 bar, bevorzugt 0,3 bis 3 bar, durchgeführt.

Bei der Durchführung des erfindungsgemäßen Verfahrens können die wasserfreien Komponenten der Umsetzung in beliebiger Reihenfolge zusammengegeben werden. Zu dieser auf 150 °C bis 220 °C, bevorzugt 165 °C bis 200 °C, erhitzten Mischung werden die wasserhaltigen Einsatzstoffe in beliebiger Reihenfolge einzeln oder im Gemisch in dem Maß so zudosiert, daß das in Form von Hydrat-und/oder Lösungswasser eingetragene Wasser durch azeotrope Destillation, beispielsweise durch das abdestillierende Azeotrop mit Halogenaromaten der Formeln (I), (II) und (III) oder mit dem Lösungsmittel oder zusätzlichem Schleppmittel aus der Mischung entfernt und abgetrennt werden kann. Der Halogenaromat wird nach Abtrennung des mitgeschleppten Wassers in das Umsetzungsgemisch zurückgeführt.

Die Aufarbeitung des Umsetzungsgemisches und die Isolierung der Polyarylensulfide kann in bekannter Weise erfolgen.

Das Polyarylensulfid kann direkt aus der Reaktionslösung oder erst z.B. nach Zugabe von Wasser und/oder verdünnten Säuren, nach üblichen Verfahrensweisen abgetrennt werden, so beispielsweise durch Filtration oder durch Zentrifugieren. Nach der Abtrennung des Polyarylensulfids schließt sich im allgemeinen eine Wäsche mit Wasser an. Eine Wäsche oder Extraktion mit anderen Waschflüssigkeiten, die auch zusätzlich oder nachträglich zu dieser Wäsche durchgeführt werden kann, ist auch möglich.

Das Polyarylensulfid kann auch beispielsweise durch Abdestillieren des Lösungsmittels und eine anschließende Wäsche, wie oben beschrieben, gewonnen werden.

Die erfindungsgemäßen Polyarylensulfide können mit anderen Polymeren, sowie Pigmenten und Füllstoffen, beispielsweise Graphit, Metallpulver, Glaspulver, Quarzmehl oder Glasfasern gemischt oder mit den für Polyarylensulfide üblichen Additiven, beispielsweise üblichen Stabilisatoren oder Entformungsmitteln, u.s.w. versetzt werden.

Im allgemeinen wird das Schmelzfließverfahren von Polyarylensulfiden nach ASTM 1238-70 bei 316 °C unter Verwendung eines 5 kg-Gewichtes gemessen und in g/10 Minuten angegeben.

Bei hohen Schmelzflußwerten kann diese Messung jedoch aufgrund der hohen Ausflußrate der Polymerschmelze Schwierigkeiten bereiten.

Die Schmelzviskosität $\eta m$ der Polymerschmelze (in Pa.s) bei 306 °C wurde in Abhängigkeit von der Schubspannung $\tau$ (in Pa.s) mit Hilfe des Instron-Rotationsviskosimeters bestimmt.

Man kann auf diese Weise die Schmelzviskosität in einem sehr weiten Bereich von $10^{-1}$ bis $10^{7}$ Pa.s bestimmen. In dem Instron-Rheometer wird das Polymer zwischen einer festen Platte und einem drehbaren Kegel geschmolzen und das Drehmoment des Kegels bestimmt. Aus Drehmoment, Winkelgeschwindigkeit und apparativen Daten kann die Schmelzviskosität in Abhängigkeit von der Schubspannung errechnet werden. Verwendet wurde das Rheometer Modell 3250 der Fa. Instron (Durchmesser des Kegels und der Platte 2 cm).

Angegeben wird die Schmelzviskosität, die bei einer Schubspannung von $\tau = 10^{2}$ Pa gemessen wurde.

Die erfindungsgemäßen Polyarylensulfide können durch Extrusion, Extrusionsblasen, Spritzgießen oder sonst übliche Verarbeitungstechniken zu Folien, Formkörpern oder Fasern verarbeitet werden. Diese können in üblicher Weise verwendung finden, z.B. als Automobilteile, Armaturen, Elektroteile, z.B. Schalter, elektronische Tafeln, chemikalienresistente und verwitterungsstabile Teile und Apparate wie Pumpengehäuse und Pumpenflügelräder, Ätzbäder, Dichtungsringe, Teile von Büromaschinen, Ventile, Kugellagerteile u.s.w.

Formteile aus den erfindungsgemäßen Polyarylensulfiden weisen eine sehr helle Eigenfarbe auf, die sich auch bei längerer thermischer Belastung (z.B. 260 °C in Luft) nur unwesentlich verändert.

Ferner weisen die erfindungsgemäßen Polyarylensulfide die für lineare Thermoplaste vorteilhaften mechanischen Eigenschaften auf.

## Vergleichsbeispiel 1

Dieses Beispiel beschreibt zum Vergleich die Herstellung von Polyphenylensulfid, ähnlich wie in EP-OS 87 045 beschrieben, jedoch ohne Verwendung von Verzweigern.

In 450 ml N,N′-Dimethylethylenharnstoff wurde ein Gemisch aus 143,5 g Natriumsulfid-trihydrat und 5,7 g NaOH bis auf 185 °C erwärmt. Dabei kondensieren 64 ml Destillat, das im wesentlichen aus Wasser besteht. Nach Zugabe von 160,2 g p-Dichlorbenzol wurde der Ansatz 9 Stunden auf 270 °C erhitzt und nach Abkühlen in 10 l Isopropanol gefällt. Man säuerte mit Schwefelsäure auf pH 1 an, filtrierte und wusch mit dest. Wasser elektrolytfrei. Man erhielt ein weißes Pulver. Die Schmelzviskosität betrug 5 Pa. Ein Schmelzkörper des Produktes war weiß gefärbt.

## Vergleichbeispiel 2

Dieses Beispiel beschreit die Herstellung von Polyphenylensulfid in N-Methylcaprolactam mit einem vorgelagerten Entwässerungsschritt, bei dem das Hydratwasser des Natriumsulfids durch azeotrope Destillation mit p-Dichlorbenzol als Schlepper entfernt wird.

Man tropfte eine Mischung von 1149,3 g Natriumsulfid 2,8 $H_2O$, 141,1 g $\epsilon$-Caprolactam, 325 g Wasser und 4 g Natriumhydroxid zeitgleich mit 611,5 g p-Dichlorbenzol so zu einer Mischung von 611,5 g p-Dichlorbenzol und 2653 g N-Methylcaprolactam, daß die Sumpftemperatur 215 °C betrug, wobei das

Hydrat- und das zugesetzte Wasser azeotrop abdestillierte und das p-Dichlorbenzol zurückgeführt wurde. Dann erhitzte man 24 Stunden unter Rückfluß, fällte in 40 l Isopropanol, säuerte mit Schwefelsäure auf pH 1 an, filtrierte und wusch elektrolytfrei. Man erhielt ein hellbeiges Pulver. Die Schmelzviskosität betrug 130 Pa. Der Schmelzkörper des Produktes war grau gefärbt.

Man erhitzte einen Schmelzkörper aus Polyphenylensulfid nach Vergleisbeispiel 2 auf 260 °C an Luft. Nach einer Stunde war der Schmelzkörper schwarz gefärbt.

Beispiel 1

Man verfuhr wie in Vergleichsbeispiel 2 beschrieben. Als Solvens wurde statt N-Methylcaprolactam N,N′-Dimethyl-2-imidazolidinon eingesetzt. Man erhielt ein weißes Pulver. Die Schmelzviskosität betrug 20 Pas. Der Schmelzkörper des Produktes war weiß gefärbt.

Beispiel 2

Man erhitzte den Schmelzkörper aus Beispiel 1 200 h auf 260 °C. Der Schmelzkörper war hellbeige gefärbt.

Beispiel 3

Eine Lösung von Natriumsulfid bei ca. 90 °C, hergestellt aus 663 ml Wasser, 503,2 g Natriumhydroxid und 230,4 g Schwefelwasserstoff, wird im Verlauf von 4 Stunden in eine bei 210 °C siedende Lösung von 462,4 g p-Dichlorbenzol in 2041 g N,N′-Dimethylbutylenharnstoff (DMBU) getropft. Das zutropfende Wasser wird azeotrop abdestilliert und über einen Kolonnenkopf ausgekreist, wobei der Azeotropbildner p-Dichlorbenzol in den Ansatz zurückgeführt wird. Gleichzeitig werden weitere 462,4 g p-Dichlorbenzol zudosiert. Anschließend wird weitere 10 Stunden zum Sieden erhitzt.

Die Reaktionslösung wird in 40 l Isopropanol gefällt und auf pH1 angesäuert. Der abgeschiedene Feststoff wird filtriert, mit Wasser elektrolytfrei gewaschen und im Vakuumtrockenschrank bei 100 °C getrocknet. Das Produkt fällt als weißes Pulver an. Es weist eine Schmelzviskosität von 25 Pas auf. Der Schmelzkörper des Produktes war weiß gefärbt.

Beispiel 4

Man erhitzte den Schmelzkörper aus Beispiel 3 200 Stunden auf 260 °C. Der Schmelzkörper war hellbeige gefärbt.

Beispiel 5

Man verfuhr wie im Vergleichsbeispiel 3 beschrieben. Als Solvens wurde statt N-Methylcaprolactam N,N′-Dimethylpropylenharnstoff (N,N′-Dimethyl-2-tetrahydropyrimidinon)eingesetzt. Man erhielt ein weißes Pulver. Die Schmelzviskosität betrug 60 Pas. Der Schmelzkörper des Produktes war weiß gefärbt.

Beispiel 6

Man erhitzte den Schmelzkörper aus Beispiel 5 200 Stunden auf 260 °C. Der Schmelzkörper war beige gefärbt.

**Ansprüche**

1. Verfahren zur Herstellung von hochmolekularen Polyarylensulfiden aus
a) 50 bis 100 Mol.-% Dihalogenaromaten der Formel

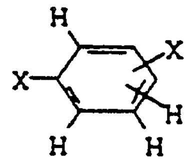

(I),

und 0 - 50 Mol.-% Dihalogenaromaten der Formel

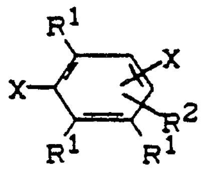

(II),

in denen

X für zueinander meta- oder paraständiges Halogen wie Chlor oder Brom steht und

$R^1$ gleich oder verschieden ist und Wasserstoff, Alkyl, Cycloalkyl, Aryl, Alkylaryl, Arylalkyl sein kann, wobei zwei zueinander orthoständige Reste $R^1$ zu einem aromatischen oder heterocyclischen Ring verknüpft sein können und mindestens ein Rest $R^1$ verschieden von Wasserstoff ist und

b) Alkalisulfiden, ggf. zusammen mit Alkalihydroxien, wobei das molare Verhältnis von Dichloraromaten zu Sulfiden im Bereich von 0,85 : 1 bis 1,15 : 1 liegt, dadurch gekennzeichnet, daß als Lösungsmittel N,N'-dialkylierte, cyclische Harnstoffe der Formel III

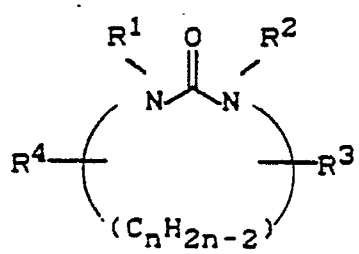

(III),

in welcher

$R^1$, $R^2$ gleich oder verschieden sind und für Alkyl, Aryl, bevorzugt Methyl, Ethyl, Phenyl, besonders bevorzugt Methyl stehen und

$R^3$, $R^4$ für Wasserstoff (H), $C_1$-$C_{22}$-Alkyl, bevorzugt H oder Methyl stehen und

n für die Zahl 2, 3 oder 4, bevorzugt 2 und 3, besonders bevorzugt 2 steht,

verwendet werden und daß das molare Verhältnis von Alkalisulfiden zu dem organischen Lösungsmittel im Bereich von 1 : 2 bis 1 : 5 liegt, und wasserfreie Einsatzstoffe vorgelegt und auf mindestens 150 °C, bevorzugt 205 °C bis 220 °C, erwärmt werden und wasserhaltige Stoffe und Reste der wasserfreien Einsatzstoffe in Form einer Lösung oder Schmelze oder als Feststoff so eingetragen werden, daß das eingebrachte Wasser aus dem Reaktionsgemisch destillativ abgetrennt wird und die Reaktion anschließend bei Temperaturen von 210 °C bis 270 °C, bevorzugt 215 °C vis 250 °C, gegebenenfalls unter leichtem Überdruck durchgeführt wird.

2. Verfahren nach Anspruch 1, dadurch gekennzeichnet, daß 1,4-Dichlorbenzol als Dihalogenaromat der Formel (I) eingesetzt wird.

3. Verfahren nach Anspruch 1, dadurch gekennzeichnet, daß N,N'-Dimethylimidazolidinon-2 als Solvens eingesetzt wird.

4. Verfahren nach Anspruch 1, dadurch gekennzeichnet, daß die Kondensation bei einem Überdruck von 0,3 bis 3 bar durchgeführt wird.